# EUROPÄISCHE PATENTSCHRIFT

(11) **EP 2 928 795 B1**
(45) Veröffentlichungstag und Bekanntmachung des Hinweises auf die Patenterteilung: **02.11.2016**
(21) Anmeldenummer: 13820718.8
(22) Anmeldetag: 06.12.2013
(51) Int. Cl.: B65G 1/04, B65G 1/133, B65G 1/137

(54) **SORTIERANLAGE UND VERFAHREN ZUM SORTIEREN VON OBJEKTEN IN EINER FÖRDERANLAGE**
SORTING DEVICE AND METHOD FOR SORTING OBJECTS IN A CONVEYING SYSTEM
INSTALLATION DE TRI ET PROCÉDÉ DE TRI D'OBJETS DANS UNE INSTALLATION DE TRANSPORT

(30) Priorität: 10.12.2012 AT 505702012
(43) Veröffentlichungstag der Anmeldung: 14.10.2015
(73) Patentinhaber: TGW Logistics Group GmbH, 4600 Wels (AT)
(72) Erfinder: LOSENEGGER, Beat, CH-5630 Muri (CH); WINKLER, Markus, A-4814 Altmünster (AT)
(74) Vertreter: Burger, Hannes
(86) Internationale Anmeldenummer: PCT/AT2013/050237
(87) Internationale Veröffentlichungsnummer: WO 2014/089586

(56) Entgegenhaltungen:
- EP-A1- 1 681 247
- WO-A1-02/02444
- DE-A1- 2 323 984
- DE-A1-102007 018 244
- JP-A- H09 272 609
- JP-A- S59 212 304
- JP-A- S61 114 907
- JP-A- 2009 120 317

## Beschreibung

Die Erfindung betrifft eine Sortieranlage, umfassend einen ersten Zwischenpuffer mit mehreren ersten, in einer ersten Linie hintereinander angeordneten und entlang dieser ersten Linie bewegbaren, Zwischenlagerungsplätzen und zumindest einen zweiten Zwischenpuffer mit mehreren zweiten, in einer zweiten Linie hintereinander angeordneten und entlang dieser zweiten Linie bewegbaren, Zwischenlagerungsplätzen. Des Weiteren betrifft die Erfindung ein Sortierverfahren für die genannte Sortieranlage.

Eine Sortieranlage beziehungsweise ein Sortierverfahren sind grundsätzlich aus dem Stand der Technik bekannt. Dabei werden Förderobjekte, beispielsweise zu kommissionierende Waren, aus einem Lager ausgelagert, entweder in einer zufälligen Reihenfolge oder auch schon vorsortiert. Diese Förderobjekte, die nun in einer noch nicht endgültigen Reihenfolge vorliegen, werden mit Hilfe der Sortieranlage beziehungsweise mit Hilfe des Sortierverfahrens in eine vorgebbare Reihenfolge gebracht. Dazu werden die Förderobjekte in einem Zwischenpuffer temporär eingelagert und danach in der gewünschten Reihenfolge wieder ausgelagert. Von einem herkömmlichen Lager unterscheidet sich ein solcher Zwischenpuffer vor allem dadurch, dass der Zwischenpuffer wesentlich kleiner ist als ein Lager und die Förderobjekte dort auch deutlich kürzer eingelagert werden als in einem Lager.

Beispielsweise offenbart die WO 2010/012364 A1 zu dieser Thematik eine Sortieranlage mit einer zentralen Abzugsbahn und zwei seitlich angeordneten Pufferbahnen, in welche die Förderobjekte eingeschleust werden und von denen sie mit Hilfe von mehreren Schiebern in einer vorgebbaren Reihenfolge wieder auf die Abzugsbahn geschoben werden können.

Ein ähnliches System ist in der EP 1 681 247 A1 offenbart, bei der Förderobjekte von zwei parallel verlaufenden Zulieferbahnen in einer vorgebbaren Reihenfolge auf eine zentrale Abzugsbahn geschoben werden.

Darüber hinaus offenbart die EP 1 760 012 A1 ein System, bei dem Förderobjekte von einer Zulieferbahn in einer vorgebbaren Reihenfolge auf eine parallel verlaufende Abzugsbahn geschoben werden.

Die WO 2007/082741 A1 offenbart weiterhin ein System, bei dem Förderobjekte von einer Zulieferbahn in eine Kreisbahn ein- und von dort in einer vorgebbaren Reihenfolge in eine Abzugsbahn ausgeschleust werden können.

Die JP H0252809 offenbart zudem ein Lagersystem, bei dem eine Vertikalfördereinrichtung mit einer Plattform, auf der eine Lagerobjekt transportiert wird, eine Lagerebene anfährt und dort anhält, wobei das Lagerobjekt in Folge mit Hilfe eines Schiebers von der Plattform in die Lagerebene geschoben wird.

Die DE 196 35 026 A1 offenbart weiterhin ein Lagersystem, das aus einem Hochregal mit einer Vielzahl von im Wesentlichen horizontal verlaufenden Regalböden besteht sowie einem Regalbediengerät, das zum Herausnehmen und/oder Einlagern von Lagerstücken aus bzw. in die Trageinheiten des Hochregals ausgebildet und relativ zum Hochregal vertikal oder horizontal verfahrbar ist. Das Regalbediengerät selbst weist mehrere Trageinheiten auf, die innerhalb des Regalbediengerätes horizontal oder vertikal nach Art eines Umlaufregals umlaufen können.

Die DE 101 57 121 A1 offenbart schließlich ein dynamisches Lager- und Materialfluss-System, bei dem zwei oder mehr Teilsysteme eingesetzt werden, welche aus je zwei Regalen mit mehreren Lagerfächern bestehen, sowie ein dazwischen liegendes Regalbediengerät zum Einlagern und Herausnehmen von Lagergut aus den Lagerfächern. Die Regalbediengeräte verfügen über mindestens eine Trageinheit mit Beschickungseinrichtung, mit welcher Lagergut aus der wenigstens einen Trageinheit in ein vorgegebenes Lagerfach des Regals eingelagert oder Lagergut aus einem vorgegebenen Fach der Trageinheit überführt werden kann. Das Regalbediengerät kann sowohl linear verfahrbar, als auch in der Art eines Paternosteraufzuges umlaufend ausgebildet sein. Die Teilsysteme stehen neben und/oder hintereinander und sind gekoppelt. Die innenliegenden Regale können zudem als Durchlaufregale ausgebildet sein. WO 02/02444 A1 beschreibt eine gattungsgemäbe Anlage.

Ein genereller Nachteil der bekannten Systeme ist, dass je nachdem in welcher Reihenfolge die Förderobjekte zugeliefert werden und je nachdem in welche gewünschte Reihenfolge sie gebracht werden sollen, mehr oder minder große Lücken im Förderfluss entstehen. Das heißt, die Förderobjekte können zwar in eine vorgebbare Reihenfolge gebracht werden, jedoch ist die Abfolge von Objekten fast zwangsläufig von Lücken durchsetzt. Dies widerspricht der Forderung an eine Sortieranlage beziehungsweise an ein Sortierverfahren, die Förderobjekte mit möglichst hohem Durchsatz in eine möglichst kontinuierliche vorgebbare Reihenfolge zu bringen. Weiterhin unterscheiden sich die entstandenen Lücken deutlich hinsichtlich ihrer Größe und sind im Förderfluss auch nicht gleichverteilt.

Eine Aufgabe der Erfindung ist es daher, eine verbesserte Sortieranlage beziehungsweise ein verbessertes Sortierverfahren anzugeben. Insbesondere soll der Durchsatz derselben erhöht und/oder ein weitgehend kontinuierlicher abgehender Förderstrom erzeugt werden.

Die Aufgabe der Erfindung wird mit einer Sortieranlage nach Anspruch 1 gelöst.

Weiterhin wird die Erfindung mit einem Verfahren zum Sortieren von Objekten in einer Förderanlage nach Anspruch 7 gelöst.

Auf diese Weise ist es möglich, den Durchsatz durch eine Sortieranlage gegenüber bekannten Systemen zu steigern. Lücken im Förderfluss, wie sie bei Anlagen nach dem Stand der Technik entstehen, können weitgehend vermieden werden, beziehungsweise sind vorhandene Lücken in der Regel ungefähr gleich groß und weitgehend gleichverteilt. Dies wird dadurch ermöglicht, dass ein geplanter Ein- und/oder Auslagervorgang in einem zweiten Zwischenpuffer vorbereitet wird, während in einem ersten Zwischenpuffer aktuell ein- und/oder ausgelagert wird und/oder die Ein- und/oder Auslagerungsvorrichtung verfahren wird. Konkret wird der Zwischenlagerungsplatz im zweiten Puffer, in den eingelagert und/oder aus dem ausgelagert werden soll, an eine Übergabeposition bewegt oder dieser Vorgang zumindest eingeleitet, bevor der Übergabeplatz der Ein- und/oder Auslagerungsvorrichtung gegenüber dem zweiten .Zwischenlagerungsplatz positioniert ist. Die Ein- und/oder Auslagerungsvorrichtung kann also im Idealfall sofort nachdem sie gegenüber dem zweiten Zwischenlagerungsplatz positioniert wurde mit der Ein- und/oder Auslagerung beginnen. Jedenfalls wird aber eine mögliche Wartezeit deutlich reduziert. Damit einhergehend entsteht ein weitgehend kontinuierlicher aus der Sortieranlage abgehender Förderfluss, und der Durchsatz der Sortieranlage wird deutlich erhöht. Wegen der vergleichsweise kurzen Verweilzeit der Förderobjekte in den Zwischenpuffern kann die Sortieranlage auch raummäßig relativ klein gehalten werden.

An dieser Stelle wird angemerkt, dass im zweiten Zwischenpuffer vorzugsweise jenes Förderobjekt lagert und an die Übergabeposition gefahren wird, welches dem ersten Förderobjekt als nächstes folgt beziehungsweise folgen soll. Dies ist aber keine notwendige Bedingung. Denkbar ist natürlich auch, dass die Ein-/Auslagerung beispielsweise des übernächsten (zweitfolgenden), drittfolgenden oder eines noch später folgenden Förderobjekts vorbereitet wird. Die Vorbereitungszeit ist damit länger, und damit steigt die Wahrscheinlichkeit, dass die Ein-/Auslagerung direkt nach dem Eintreffen des Übergabeplatzes der Ein- und/oder Auslagerungsvorrichtung an der Übergabeposition erfolgen kann. Selbstverständlich ist es auch möglich, die Ein-/Auslagerung mehrerer folgender Objekte in verschiedenen Zwischenpuffern simultan beziehungsweise zumindest mit einer zeitlichen Überschneidung vorzubereiten. Weitere vorteilhafte Ausgestaltungen und Weiterbildungen der Erfindung ergeben sich aus den Unteransprüchen sowie aus der Beschreibung in Zusammenschau mit den Figuren.

Erfindungsgemäß liegen die erste Linie und die zweite Linie in zueinander parallelen Ebenen, insbesondere sind diese als zueinander parallele erste und zweite Gerade ausgebildet, und die dritte Linie liegt in einer auf die erste/zweite Ebene normal stehenden dritten Ebene, insbesondere ist diese als dritte Gerade ausgebildet, welche normal auf die erste und zweite Gerade steht. Im Speziellen erfolgt die Ein-/Auslagerung in einer vierten Richtung, welche normal auf die erste/zweite Gerade und die dritte Gerade steht. Bei dieser Ausführungsform können mehrere Zwischenpuffer, die zueinander parallel ausgerichtet sind, auf einfache Weise aneinander gereiht werden. Die Ein- und/oder Auslagerungsvorrichtung ist dazu quer ausgerichtet. Konkret können die Zwischenpuffer beispielsweise regalartig übereinander angeordnet sein und die Ein- und/oder Auslagerungsvorrichtung als vor dem Regal stehender Einlagerungs- und/oder Auslagerungslift ausgebildet sein. Bei der Ein- und/oder Auslagerung werden die Förderobjekte quer zur Regalfront in einen Zwischenlagerungsplatz ein- oder aus diesem ausgelagert. Im Speziellen ist es also von Vorteil, wenn die erste und zweite Ebene respektive die erste und zweite Gerade horizontal ausgerichtet sind. Die dritte Ebene respektive dritte Gerade ist demnach vertikal ausgerichtet. Denkbar ist natürlich auch, dass die Zwischenpuffer nebeneinander angeordnet sind und die Ein- und/oder Auslagerungsvorrichtung horizontal über/unter dem Zwischenpuffer verfährt. Die Ein- und/oder Auslagerung erfolgt in diesem Fall vertikal.

Besonders vorteilhaft ist es, wenn die erste und/oder zweite Linie geschlossen ist/sind. Die Zwischenlagerungsplätze sind demnach in einem Ring angeordnet, insbesondere in einem Kreis, einem Oval oder einem Rechteck. Die Zwischenlagerungsplätze können insbesondere auch immer in eine Richtung bewegt werden, damit Gegenstände in den als Förderobjekten fungierenden Ladehilfsmitteln durch die wechselnden Beschleunigungen nicht durcheinander geworfen werden. Denkbar ist aber natürlich auch eine Vor-/Zurückbewegung anhand des kürzesten Wegs.

Erfindungsgemäß ist einer Einlagerungsvorrichtung auf einer Seite der ersten/zweiten Linie jeweils eine Auslagerungsvorrichtung auf der anderen Seite der Linien gegenüber gestellt. Im Speziellen ist es dabei von Vorteil, wenn der Übergabeplatz der Einlagerungsvorrichtung, der Zwischenlagerungsplatz, an dem die Einlagerungsvorrichtung positioniert ist, und der Übergabeplatz der Auslagerungsvorrichtung in einer Bewegungsrichtung eines Ein-/Auslagerungsmechanismus hintereinander liegen. Dementsprechend ist es auch von Vorteil, wenn eine auf einer Seite der ersten/zweiten Linie angeordnete Einlagerungsvorrichtung und eine auf der anderen Seite der Linien angeordnete Auslagerungsvorrichtung jeweils gegenüber demselben Zwischenlagerungsplatz positioniert werden. Vorteilhaft ist es dabei Insbesondere, wenn sich der Einlagerungsvorgang und der Auslagerungsvorgang zeitlich überschneiden, insbesondere simultan ausgeführt werden. Auf diese Weise können ein Einlagerungsvorgang in den Zwischenpuffer und ein Auslagerungsvorgang aus demselben simultan oder wenigstens im Wesentlichen simultan erfolgen. Beispielsweise kann das einzulagernde Objekt das auszulagernde Objekt vor sich her und aus dem Zwischenpuffer hinausschieben, beziehungsweise kann ein Einlagerungsvorgang gleichzeitig mit einem Auslagerungsvorgang gestartet und auch mit diesem beendet werden (simultane Ein-/Auslagerung). Für eine simultane Ein-/Auslagerung ist es nicht zwingend erforderlich, dass sich das einzulagernde Objekt und das auszulagernde Objekt berühren. Beispielsweise können Rollenförderer oder Förderbänder an den Übergabeplätzen beziehungsweise Riemenein-/ausschleuser in den Zwischenpuffern voneinander beabstandete ein-/auszulagernde Objekte simultan bewegen. Denkbar ist aber auch, dass der Auslagerungsvorgang vor dem Einlagerungsvorgang gestartet wird, diese während einer gewissen Zeitspanne aber gleichzeitig erfolgen (im Wesentlichen simultane Ein-/Auslagerung). Beide Ein-/Auslagerungsverfahren werden dadurch ermöglicht, dass sich der Zwischenpuffer zwischen einer Einlagerungsvorrichtung und einer Auslagerungsvorrichtung befindet. Zum Beispiel können die Zwischenpuffer regalartig übereinander angeordnet die Einlagerungsvorrichtung als vor dem Regal stehender Einlagerungslift und die Auslagerungsvorrichtung als hinter dem Regal stehender Auslagerungslift ausgebildet sein. In diesem Fall werden der Einlagerungslift und der Auslagerungslift in derselben Zeile beziehungsweise in derselben Spalte des Regals positioniert und sodann der simultane oder quasi simultane Ein-/Auslagerungsvorgang angestoßen.

Günstig ist es, wenn die Ein- und/oder Auslagerungsvorrichtung als diskontinuierlicher Förderer, insbesondere als Lift, ausgebildet ist/sind. Bei einem diskontinuierlichen Förderer (insbesondere Lift) erfolgen ein Ein- und/oder Auslagervorgang oder mehrere Ein- und/oder Auslagervorgänge im Wechsel mit einem Befüllen und/oder Entleeren des Förderers. Dazu wechselt der Förderer im Betrieb auch laufend seine Bewegungsrichtung, das heißt ein Lift fährt beispielsweise rauf und runter. Der diskontinuierliche Förderer kann also nach jedem Einlagerungsvorgang in den Zwischenpuffer und/oder Auslagervorgang aus dem Zwischenpuffer mit einem (einzigen) Objekt aus einem zuführenden Förderstrom befüllt werden und/oder ein (einziges) Objekt in einen abführenden Förderstrom abgeben. Alternativ ist auch vorstellbar, dass der diskontinuierliche Förderer nach mehreren Einlagerungsvorgängen in den Zwischenpuffer und/oder Auslagervorgängen aus dem Zwischenpuffer mit mehreren Objekten aus einem zuführenden Förderstrom befüllt wird und/oder mehrere Objekte in einen abführenden Förderstrom abgibt. Von Vorteil ist es beim Einsatz eines diskontinuierlichen Förderers, wenn nachfolgende Ein und/oder Auslagerungsvorgänge (stets) in verschiedenen Zwischenpuffern (insbesondere Ebenen) stattfinden, sodass die jeweiligen Ein und/oder Auslagerungsvorgänge durch Positionieren des korrekten Zwischenlagerungsplatzes vorbereitet werden können.

Günstig ist es auch, wenn die Ein- und/oder Auslagerungsvorrichtung als im Wesentlichen kontinuierlicher Förderer, insbesondere als Paternoster, ausgebildet ist. Auf diese Weise können Förderobjekte im Wesentlichen kontinuierlich in das Zwischenlager eingelagert respektive aus diesem ausgelagert werden. Der kontinuierliche Förderer (insbesondere Paternoster) kann sich dabei im engeren Sinn kontinuierlich bewegen oder auch schrittweise. In letzterem Fall hält der Förderer für einen Ein- und/oder Auslagervorgang immer kurz an und bewegt sich dann in die nächste Position weiter. Ein Kennzeichen des kontinuierlichen Förderers ist es, dass gleichzeitig zu einem Einlagerungsvorgang in den Zwischenpuffer und/oder Auslagervorgang aus dem Zwischenpuffer ein Befüllen des Förderers aus einem zuführenden Förderstrom und/oder ein Entleeren desselben in einen abführenden Förderstrom an anderer Stelle erfolgt oder zumindest erfolgen kann. Dies im Unterschied zu einem diskontinuierlichen Förderer (insbesondere Lift) bei dem ein Ein- und/oder Auslagervorgang oder mehrere Einund/oder Auslagervorgänge im Wechsel mit einem Befüllen und/oder Entleeren des Förderers erfolgen. Von Vorteil ist es beim Einsatz eines kontinuierlichen Förderers, wenn nachfolgende Ein- und/oder Auslagerungsvorgänge (stets) in verschiedenen Zwischenpuffern (insbesondere Ebenen) stattfinden, sodass die jeweiligen Ein und/oder Auslagerungsvorgänge durch Positionieren des korrekten Zwischenlagerungsplatzes vorbereitet werden können. Eine weitere Möglichkeit für einen kontinuierliche Ein- und/oder Auslagerungsvorrichtung ist eine Förderstrecke, welche gelenkig mit einem (starr verlegten) Zulieferförderer /Ablieferförderer und gelenkig mit einem Übergabeplatz der Ein-/Auslagerungsvorrichtung verbunden ist. Ist die Ein-/Auslagerungsvorrichtung als Lift ausgeführt, so ändert sich die Steigung der genannten Förderstrecke dementsprechend je nach Position des Übergabeplatzes. Dieser bleibt aber über die genannte Förderstrecke stets oder zumindest über einen bestimmten Verfahrbereich des Lifts mit dem Übergabeplatz verbunden und kann diesen dann kontinuierlich mit Förderobjekten versorgen beziehungswese Förderobjekte von diesem abführen.

Günstig ist es weiterhin, wenn die Sortieranlage nur eine einzige kombinierte Ein- und/oder Auslagerungsvorrichtung oder eine einzige Einlagerungsvorrichtung sowie eine einzige Auslagerungsvorrichtung aufweist. Die Sortieranlage weist also eine einzige Ein- und/oder Auslagerungsvorrichtung auf einer Seite des Zwischenlagers oder eine einzige Einlagerungsvorrichtung auf einer Seite des Zwischenlagers sowie eine einzige Auslagerungsvorrichtung auf der anderen Seite des Zwischenlagers auf. Dadurch kann der Sortiervorgang relativ einfach gesteuert werden.

Günstig ist es, wenn eine Einlagerungsvorrichtung mit einem Zulieferförderer und eine Auslagerungsvorrichtung mit einem Ablieferförderer beziehungsweise eine kombinierte Einund/oder Auslagerungsvorrichtung mit einem Zulieferförderer und einem Ablieferförderer respektive einem kombinierten Zuliefer-/Ablieferförderer verbunden sind. Dadurch kann die Zulieferung, Sortierung und Ablieferung vollautomatisch ablaufen.

Bei dem vorgestellten Sortierverfahren ist es von Vorteil, wenn die Schritte a) bis c) rekursiv anhand einer Ausgangs-Sortierreihenfolge jeweils mit einem anderen Förderobjekt respektive mit einem anderen Zwischenlagerungsplatz ausgeführt werden. Die Auslagerung hat demgemäß Priorität über der Einlagerung. Die zweiten Zwischenlagerungsplätze werden beim nächsten Rekursionsschritt die neuen ersten Zwischenlagerungsplätze und weitere dritte oder auch die alten ersten Zwischenlagerungsplätze werden die neuen zweiten Zwischenlagerungsplätze und so weiter.

Vorteilhaft ist es, wenn die einem Zulieferförderer und/oder Abliefenörderer näher liegenden Zwischenpuffer mit weniger Förderobjekten befüllt werden als weiter weg liegende Zwischenpuffer. Insbesondere können diese auch verschieden groß ausgebildet sein. Dadurch wird wegen kurzer Wege eine Systembeschleunigung erzielt, wenn auf den näher liegenden Zwischenpuffern häufiger vorkommende Förderobjekte abgelegt werden.

Günstig ist es schließlich, wenn eine Einlagerungsvorrichtung/Auslagerungsvorrichtung mehrere Förderobjekte von einem Zulieferförderer übernimmt/an einen Ablieferförderer übergibt und diese an mehreren einzelnen Positionen hintereinander in verschiedene Zwischenlagerungsplätze abgibt oder von diesen übernimmt bevor erneut mehrere Förderobjekte von einem Zulieferförderer übernommen/an einen Ablieferförderer übergeben werden. Auf diese Weise kann verhindert werden, dass die (diskontinuierlich arbeitende) Einlagerungsvorrichtung/Auslagerungsvorrichtung allzu oft nachgeladen oder entladen werden muss. Stattdessen werden mehrere Förderobjekte auf einmal von einem Zulieferförderer übernommen oder an einen Ablieferförderer übergeben. Konkret ist beispielsweise ein Lift mit einer Plattform vorstellbar, welche mehr als ein Förderobjekt aufnehmen kann. Diese Variante der Sortieranlage ist insbesondere dann von Vorteil, wenn die Einlagerungsvorrichtung/Auslagerungsvorrichtung lange Wegstrecken zwischen den Zwischenpuffern und dem Zulieferförderer/Ablieferförderer zurücklegen muss.

An dieser Stelle wird angemerkt, dass sich die verschiedenen Varianten des Sortierverfahrens sowie die daraus resultierenden Vorteile sinngemäß auch auf die vorgestellte Sortieranlage angewendet werden können und umgekehrt.

Zum besseren Verständnis der Erfindung wird diese anhand der nachfolgenden Figuren näher erläutert. Es zeigen:
- Fig. 1: eine beispielhafte und schematisch dargestellte Sortieranlage in Vorderansicht;
- Fig. 2: die Sortieranlage aus Fig. 1 in Draufsicht;
- Fig. 3: die Sortieranlage aus Fig. 1 in Seitenansicht;
- Fig. 4: eine beispielhafte und schematisch dargestellte Sortieranlage mit einem Paternoster in Schrägansicht;
- Fig. 5: eine beispielhafte und schematisch dargestellte Sortieranlage mit ringförmigen Zwischenpuffern in Schrägansicht;
- Fig. 6: wie Fig. 5 nur mit einem Paternoster anstelle des Lifts und
- Fig. 7: eine beispielhafte und schematisch dargestellte Sortieranlage mit ringförmigen Zwischenpuffern und zwei gegenüber angeordneten Liften;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

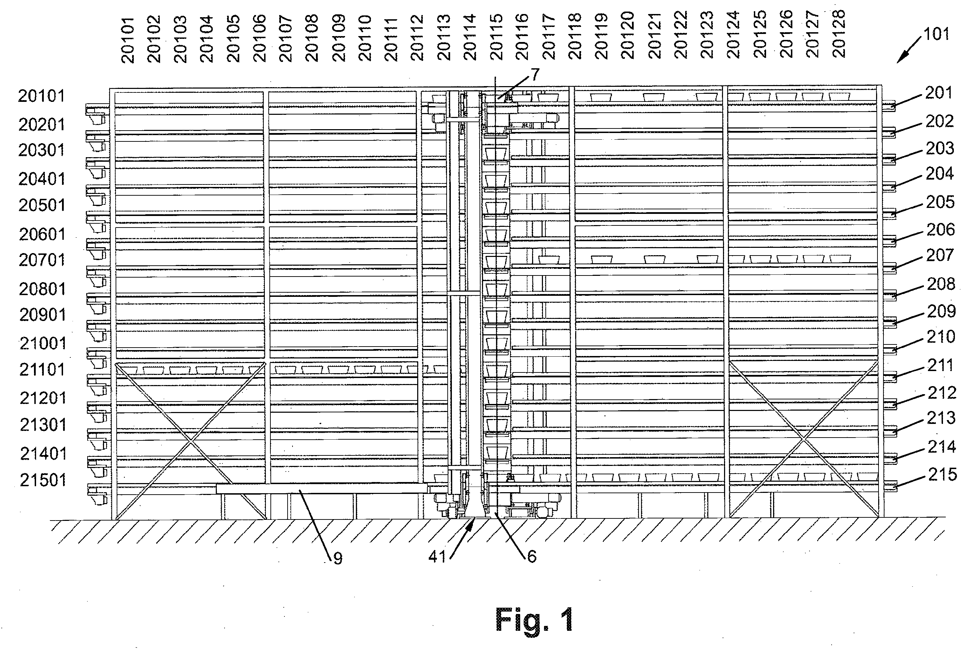

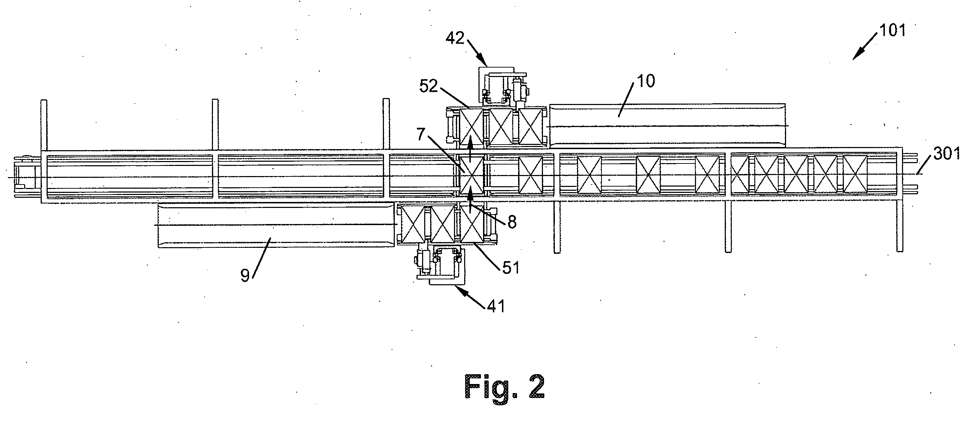

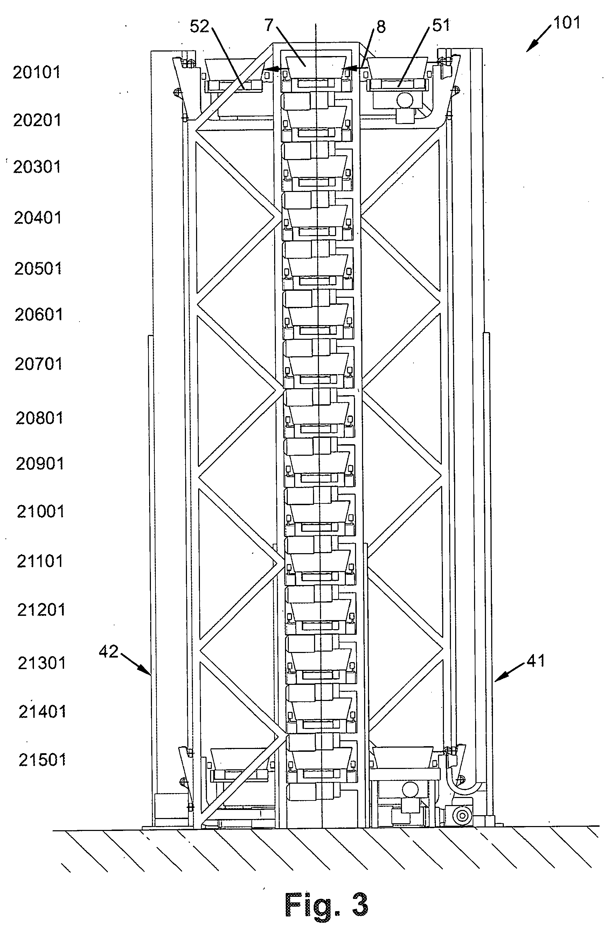

Die Figuren 1 bis 3 zeigen ein erstes Beispiel für eine Sortieranlage 101. Konkret ist die Sortieranlage 101 in Fig. 1 in Vorderansicht, in Fig. 2 in Draufsicht und in Fig. 3 in Seitenansicht dargestellt.

Die Sortieranlage 101 umfasst mehrere Zwischenpuffer 201..215 mit mehreren jeweils in einer Linie 301..315 hintereinander angeordneten und entlang dieser Linie 301..315 bewegbaren Zwischenlagerungsplätzen 20101.. 21518, wobei die ersten drei Ziffern der betreffenden Bezugszeichen in diesem Beispiel eine Zeile des durch die Zwischenpuffer 201..215 gebildeten Regals angeben, die letzten zwei Ziffern dagegen die Spalte. Die Sortieranlage umfasst weiterhin eine Einlagerungsvorrichtung 41 und eine Auslagerungsvorrichtung 42 mit je einem Übergabeplatz 51, 52, welche entlang quer zu den Linien 301..315 verlaufenden dritten Linien 6 verfahrbar sind, derart, dass die Übergabeplätze 51 und 52 gegenüber den Zwischenlagerungsplätzen 20201..21518 positionierbar sind. Weiterhin umfasst die Sortieranlage 101 eine Steuerung zum Bewegen der Zwischenlagerungsplätze 20101..21518 entlang der Linien 301..315.

Völlig wahlfrei wird für die folgenden Betrachtungen angenommen, dass es sich beim Zwischenpuffer 201 um einen ersten Zwischenpuffer mit mehreren ersten, in einer ersten Linie 301 hintereinander angeordneten und entlang dieser ersten Linie 301 bewegbaren, Zwischenlagerungsplätzen 20101..20118 handelt und beim Zwischenpuffer 211 um einen zweiten Zwischenpuffer mit mehreren zweiten, in einer zweiten Linie 311 hintereinander angeordneten und entlang dieser zweiten Linie 311 bewegbaren Zwischenlagerungsplätzen 21101..21118. Die genannte Steuerung ist dazu eingerichtet, die zweiten Zwischenlagerungsplätze 21101..21118 entlang der zweiten Linie 311 zu bewegen, während ein erstes Förderobjekt 7 zwischen einem ersten Zwischenlagerungsplatz 20115 und einem gegenüber positionierten Übergabeplatz 51, 52 ausgetauscht und/oder der Übergabeplatz 51, 52 zu einem zweiten Zwischenlagerungsplatz 21101..21118 bewegt wird.

Das Verfahren zum Sortieren von Objekten 7 in einer Förderanlage umfasst nun die Schritte:
a) Austauschen eines ersten Förderobjekts 7 zwischen einem ersten Zwischenlagerungsplatz 20115 des ersten Zwischenpuffers 201,
b) Verfahren des Übergabeplatzes 51, 52 in eine Position gegenüber einem zweiten Zwischenlagerungsplatz 21101..21118 des zweiten Zwischenpuffers 211 und
c) Bewegen der zweiten Zwischenlagerungsplätze 21101..21118 entlang der zweiten Linie 311 während Schritt a) und/oder b).

Als Beispiel wird angenommen, dass sich das ein-/auszulagernde Förderobjekt, das dem Förderobjekt 7 auf dem ersten Zwischenlagerungsplatz 20115 des ersten Zwischenpuffers 201 folgt, auf dem zweiten Zwischenlagerungsplatz 21106 des zweiten Zwischenpuffers 211 lagert. Gemäß dem vorgeschlagenen Verfahren wird der zweite Zwischenlagerungsplatz 21106 an eine Übergabeposition (also zur Einlagerungsvorrichtung 41 / Auslagerungsvorrichtung 42) bewegt, oder dieser Vorgang wird zumindest eingeleitet, bevor der Übergabeplatz 51, 52 der Ein- und/oder Auslagerungsvorrichtung 41, 42 gegenüber dem zweiten Zwischenlagerungsplatz 21106 positioniert ist. Dazu sind die Objekte 7 in den Zwischenpuffern 201..215 beweglich gelagert, beispielsweise auf Rollenförderern oder wie in den Figuren 1 bis 3 dargestellt auf Förderbändern, die gleichsam die "Regalböden" bilden. Im Idealfall langt der Zwischenlagerungsplatz 21106 an der Übergabeposition spätestens mit Eintreffen der Übergabeplätze 51, 52 der Einlagerungsvorrichtung 41/Auslagerungsvorrichtung 42 ein. Der Einund/oder Auslagerungsvorrichtung für das Objekt 7 auf dem Zwischenlagerungsplatz 21106 kann dann sofort mit Eintreffen der genannten Übergabeplätze 51, 52 beginnen. In jedem Fall wird eine Wartezeit, die für ein Eintreffen des Zwischenlagerungsplatzes 21106 bei den bereits vor der zweiten Zwischenpuffer 211 positionierten Übergabeplätze 51, 52 benötigt wird, reduziert. Damit kann der Durchsatz durch die Sortieranlage 101 erhöht und diese raummäßig klein gehalten werden. Darüber hinaus kann ein weitgehend kontinuierlicher aus der Sortieranlage 101 abgehender Förderfluss realisiert werden. Zumindest können Lücken im abgehenden Förderfluss relativ klein gehalten werden.

Die Verfahrensschritte a) bis c) werden vorzugsweise rekursiv anhand einer Ausgangs-Sortierreihenfolge jeweils mit einem anderen Förderobjekt 7 respektive mit einem anderen Zwischenlagerungsplatz 20101..21518 ausgeführt. Die Auslagerung hat demgemäß Priorität über der Einlagerung. Die zweiten Zwischenlagerungsplätze 21101..21118 werden beim nächsten Rekursionsschritt die neuen ersten Zwischenlagerungsplätze und weitere dritte oder auch die alten ersten Zwischenlagerungsplätze werden die neuen zweiten Zwischenlagerungsplätze und so weiter.

Im vorliegenden Beispiel sind die Linien 301..315, entlang derer in den Zwischenpuffern 201..215 eingelagerte Förderobjekte 7 bewegt werden können, als zueinander parallele Geraden ausgebildet. Die dritten Linien 6, entlang derer die Übergabeplätze 51, 52 bewegt werden, stehen normal auf die Geraden 301..315. Die Ein-/Auslagerung in die Zwischenpuffer 201..215 als solche erfolgt wiederum entlang einer vierten Geraden 8, welche normal auf die Geraden 301..315 und die dritte Geraden 6 steht. Die Geraden 301..315 und die vierte Gerade 8 sind in diesem Beispiel darüber hinaus horizontal die dritte Gerade 6 vertikal ausgerichtet. Die einzelnen zueinander parallelen Zwischenpuffer 201..215 können daher wie in diesem Beispiel auf einfache Weise aneinander (hier regalartig übereinander) gereiht werden. Diese Anordnung ist aber nicht zwingend für die Erfindung. Denkbar ist beispielsweise auch, dass die Zwischenpuffer nebeneinander angeordnet sind und die Ein- und/oder Auslagerungsvorrichtung horizontal über/unter dem Zwischenpuffer verfährt. Die Ein- und/oder Auslagerung erfolgt in diesem Fall vertikal. Die Zwischenpuffer bilden in diesem Fall gleichsam ein "liegendes" Regal.

In dem in den Figuren 1 bis 3 dargestellten Beispiel ist die Ein- und/oder Auslagerungsvorrichtung als diskontinuierlicher Förderer, konkret als Lift 41, 42, ausgebildet. Bei den-Liften 41, 42 erfolgen ein Ein- und/oder Auslagervorgang oder mehrere Ein- und/oder Auslagervorgänge im Wechsel mit einem Befüllen und/oder Entleeren der Lifte 41, 42. Im vorliegenden Beispiel kann jeder Lift 41, 42 drei Förderobjekte 7 auf einmal aufnehmen. Das bedeutet, dass die Lifte 41, 42 nur nach jedem dritten (einzeln ausgeführten) Ein- und/oder Auslagervorgang zu einem Zulieferförderer 9 respektive einem Ablieferförderer 10 fahren müssen, um Förderobjekte 43 in die Zwischenpuffer 201..215 einzulagern respektive aus diesem auszulagern. Der Zulieferförderer 9 und der Ablieferförderer 10 können beispielsweise als Rollenförderer ausgebildet sein und die Zwischenpuffer 201..215 eingangsseitig mit einem nicht dargestellten Warenlager beziehungsweise ausgangsseitig mit nicht dargestellten Kommissionier-Arbeitsplätzen verbinden. Selbstverständlich sind aber auch andere Ausführungsformen denkbar, bei denen die Lifte 41, 42 mehr oder weniger Objekte 7, insbesondere nur ein einziges Objekt 7, aufnehmen können.

Bei der in den Figuren 1 bis 3 dargestellten Sortieranlage 101 ist der Lift 41 vor den Zwischenpuffern 201..215 angeordnet, der Lift 42 gegenüber liegend auf der hinteren Seite der Zwischenpuffer 201..215. Vorteilhaft werden der vor den Zwischenpuffern 201..215 angeordnete Lift 41 und der dahinter angeordnete Lift 42 für das Ein- beziehungsweise Auslagern von Objekten 7 jeweils gegenüber demselben Zwischenlagerungsplatz positioniert. Dadurch können sich der Einlagerungsvorgang und der Auslagerungsvorgang zeitlich überschneiden, insbesondere simultan ausgeführt werden. Konkret liegen der Übergabeplatz 51 des Einlagerungslifts 41, der Zwischenlagerungsplatz 20115, an dem der (einzige) Einlagerungslift 41 positioniert ist und der der Übergabeplatz 52 des (einzigen) Auslagerungslifts 42 in einer Bewegungsrichtung 8 eines Ein-/Auslagerungsmechanismus hintereinander, hier im Speziellen auf einer Geraden. Beispielsweise kann der Ein-/Auslagerungsmechanismus als im Zwischenpuffer 201..215 angeordneter und quer zu den Geraden 301..315 ausgerichteter Riemeneinbeziehungsweise -ausschleuser ausgebildet sein. Alternativ oder zusätzlich ist natürlich auch denkbar, dass zumindest einer der Übergabeplätze 51, 52 der Auslagerungslifte 41, 42 (insbesondere aber beide) mit einer Fördervorrichtung ausgestattet oder diese als solche ausgebildet sind. Beispielsweise kann ein Übergabeplatz 51, 52 durch einen Rollenförderer oder ein Förderband gebildet sein oder mit einem Schieber ausgestattet sein. Beispielsweise kann das einzulagernde Objekt 7 das auszulagernde Objekt 7 vor sich her und aus dem Zwischenpuffer 201 hinausschieben, beziehungsweise kann ein Einlagerungsvorgang gleichzeitig mit einem Auslagerungsvorgang gestartet und auch mit diesem beendet werden (simultane Ein-/Auslagerung). Für eine simultane Ein-/Auslagerung ist es nicht zwingend erforderlich, dass sich das einzulagernde Objekt 7 und das auszulagernde Objekt 7 berühren. Beispielsweise können Rollenförderer oder Förderbänder an den Übergabeplätzen 51, 52 beziehungsweise Riemenein-/ausschleuser in den Zwischenpuffern 201..215 voneinander beabstandete ein-/auszulagernde Objekte 7 simultan bewegen. Denkbar ist aber auch, dass der Auslagerungsvorgang vor dem Einlagerungsvorgang gestartet wird, diese während einer gewissen Zeitspanne aber gleichzeitig erfolgen (im Wesentlichen simultane Ein-/Auslagerung).

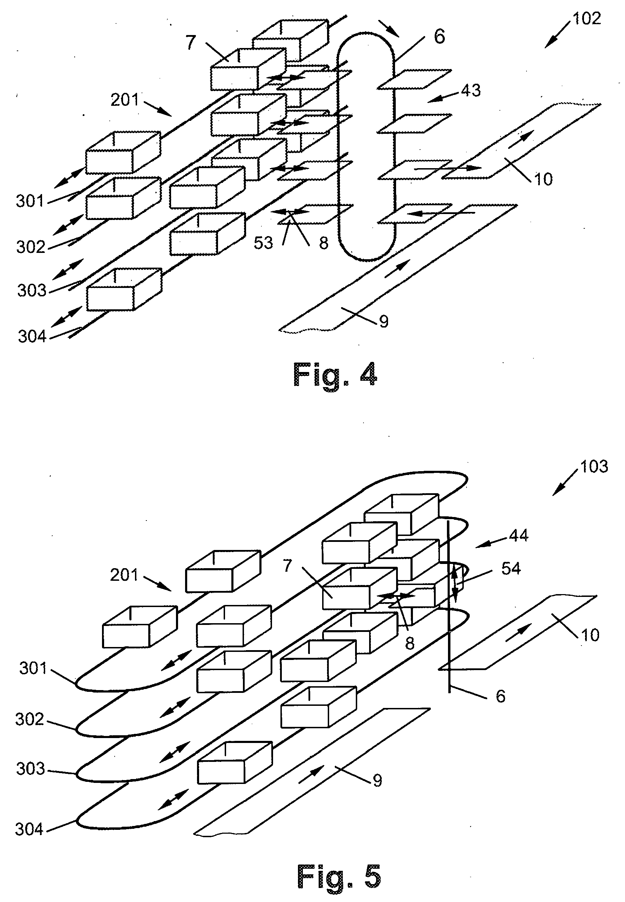

Die Fig. 4 zeigt nun eine weitere und rein schematisch dargestellte Variante einer Sortieranlage 102. Die Zwischenpuffer 201..204 befinden sich wie schon bei der Ausführungsform nach den Figuren 1 bis 3 regalartig übereinander. Die Objekte 7 können dabei entlang der Geraden 301..304 verschoben werden. Anstelle der Lifte 41 und 42 ist in diesem Fall jedoch ein Paternoster 43 vorgesehen, das einen kontinuierlichen oder im Wesentlichen kontinuierlichen Förderer darstellt. Mit Hilfe der Vielzahl an Übergabeplätzen 53 können Förderobjekte 7 im Wesentlichen kontinuierlich in die Zwischenpuffer 201..204 eingelagert respektive aus diesen ausgelagert sowie im Wesentlichen kontinuierlich vom Zulieferförderer 9 übernommen beziehungsweise an den Ablieferförderer 10 abgegeben werden. Der Paternoster 43 kann sich dabei im engeren Sinn kontinuierlich bewegen oder auch schrittweise. In letzterem Fall hält es für einen Ein- und/oder Auslagervorgang immer kurz an und bewegt sich dann in die nächste Position weiter. Ein Kennzeichen des kontinuierlichen Förderers 43 ist es, dass gleichzeitig zu einem Einlagerungsvorgang in den Zwischenpuffer 201..204 und/oder Auslagervorgang aus dem Zwischenpuffer 201..204 ein Befüllen des Förderers 43 aus einem zuführenden Förderstrom und/oder ein Entleeren desselben in einen abführenden Förderstrom erfolgen kann. Damit wird die Leistungsfähigkeit der Sortieranlage 102 nochmals gesteigert.

Eine weitere Möglichkeit für einen kontinuierliche Ein- und/oder Auslagerungsvorrichtung ist eine Förderstrecke, welche gelenkig mit einem (starr verlegten) Zulieferförderer 9 und/oder Ablieferförderer 10 und gelenkig mit einem Übergabeplatz 51, 52 der Ein-/Auslagerungsvorrichtung 41, 42 verbunden ist. Sind die Ein-/Auslagerungsvorrichtungen 41, 42 als Lifte ausgeführt, so ändert sich die Steigung der genannten Förderstrecke dementsprechend je nach Position des Übergabeplatzes 51, 52. Dieser bleibt aber über die genannte Förderstrecke stets oder zumindest über einen bestimmten Verfahrbereich der Lifte 41, 42 mit dem jeweiligen Übergabeplatz 51, 52 verbunden.

Die Fig. 5 zeigt nun eine weitere und rein schematisch dargestellte Variante einer Sortieranlage 103, welche der in den Figuren 1 bis 3 dargestellten Sortieranlage 101 recht ähnlich ist. Im Unterschied dazu weist die Sortieranlage 103 aber einen (einzigen) kombinierten Ein/Auslagerungslift 44 auf. Zudem sind die Zwischenlagerungsplätze in einem Ring angeordnet. Die Förderobjekte 7 können also entlang der geschlossenen Linien 301..304 bewegt werden, die hier in Form eines Ovals ausgebildet sind. Denkbar sind natürlich auch kreisförmige oder rechteckförmige Linien, letztere insbesondere mit abgerundeten Ecken. Dadurch ist es auch bei vollständig befüllten Zwischenpuffern 201..204 möglich, jedes beliebige Förderobjekt 7 an den Lift 44 zu fahren. Insbesondere können diese auch stets in eine Richtung bewegt werden, damit beispielsweise Gegenstände in als Förderobjekten 7 fungierenden Ladehilfsmitteln durch die wechselnden Beschleunigungen nicht durcheinander geworfen werden. Denkbar ist aber natürlich auch eine Vor-/Zurückbewegung anhand des kürzesten Wegs.

In diesem Beispiel liegen die Linien 301..304 in zueinander parallelen und horizontal ausgerichteten Ebenen. Die dritte Gerade 6 steht wiederum normal auf diese Ebenen. Selbstverständlich ist auch hier eine "liegende" Anordnung denkbar. Soll bei einer "liegenden" Anordnung simultan ein- und ausgelagert werden, ist generell (also auch bei geraden Linien 301..304) zu berücksichtigen, dass spezielle Haltevorrichtungen benötig werden, welche die Förderobjekte 7 in den Zwischenpuffern 201..215 halten, da ein einfaches Abstellen auf dem "Regalboden" dann ja nicht mehr möglich ist. Beispielsweise können dies Halteelemente (z.B. Zapfen oder Bolzen) sein, die in Ausnehmungen (z.B. Bohrungen oder Schlitze) von als Förderobjekten 7 fungierenden Ladehilfsmitteln eingreifen.

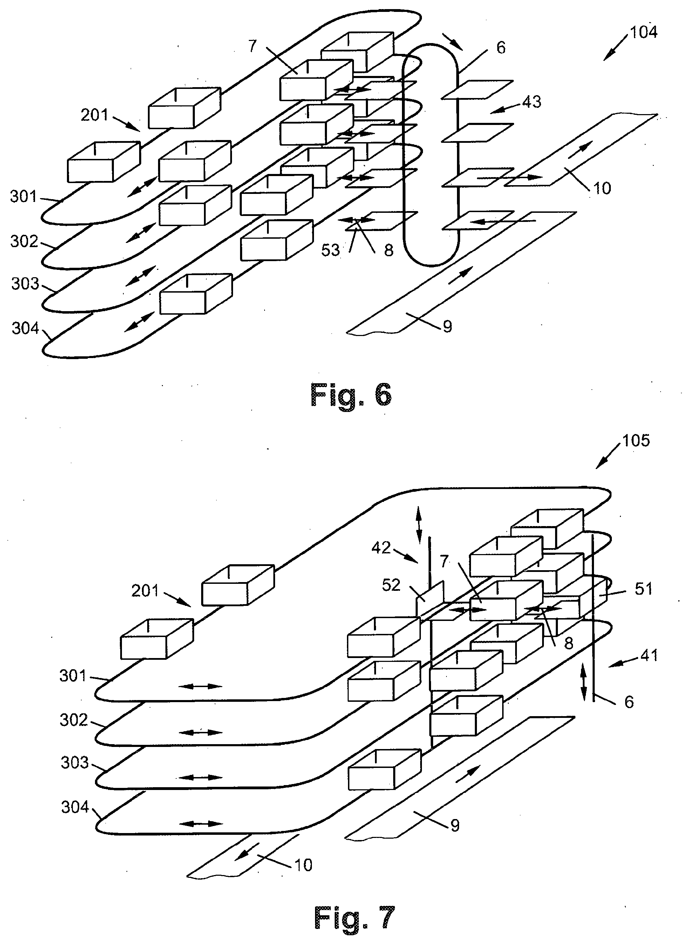

Fig. 6 zeigt nun eine Sortieranlage 104, welche ähnlich der bereits in Fig. 4 dargestellten Sortieranlage 102 ist. Im Unterschied dazu sind die Linien 301..304 auf denen die Förderobjekte 7 in den Zwischenpuffern 201..204 bewegt werden nicht als Geraden sondern als geschlossene Ovale ausgebildet. Die daraus resultierenden Vorteile ergeben sich sinngemäß als Kombination der Vorteile der Sortieranlagen 102 (Fig. 4) und 103 (Fig. 5).

Fig. 7 zeigt schließlich eine Sortieranlage 105 die als Kombination der Sortieranlagen 101 aus den Figuren 1 bis 3 und der Sortieranlage 103 aus Fig. 5 aufgefasst werden kann. Neben den als geschlossene Ovale ausgebildeten Linien 301..304, entlang derer die Förderobjekte 7 in den Zwischenpuffern 201..204 bewegt werden können, sind bei dieser Variante wiederum ein Einlagerungslift 41 und ein gegenüber, hier im Inneren des Ovals angeordneter, Auslagerungslift 42 vorgesehen. Letzterer kann eine Ebene tiefer fahren als der Einlagerungslift 41, um den Ablieferförderer 10 erreichen zu können. Selbstverständlich kann der Ablieferförderer 10 auch über den Zwischenpuffern 201..204 angeordnet sein. Denkbar ist natürlich auch, dass die Einlagerung innerhalb des Rings und die Auslagerung außerhalb des Rings erfolgt. Schließlich wird angemerkt, dass die Ablieferrichtung nur der besseren Darstellbarkeit halber entgegen der Zulieferrichtung gewählt wurde. Selbstverständlich kann auch in dieselbe Richtung zu- und abgeliefert werden.

Generell (also sowohl bei Einsatz eines Lifts 41, 42, 44 als auch bei Einsatz eines Paternosters 43) ist es von Vorteil, wenn nachfolgende Ein und/oder Auslagerungsvorgänge (stets) in verschiedenen Zwischenpuffern 201..215 (insbesondere Ebenen) stattfinden, sodass die jeweiligen Ein und/oder Auslagerungsvorgänge durch Positionieren des korrekten Zwischenlagerungsplatzes 20118..21518 vorbereitet werden können.

Von Vorteil ist es auch, wenn die einem Zulieferförderer 9 und/oder Ablieferförderer 10 näher liegenden Zwischenpuffer 201..215 (in den dargestellten Beispielen also die unteren Ebenen) mit weniger Förderobjekten 7 befüllt werden als weiter weg liegende Zwischenpuffer 201..215. Insbesondere können die Zwischenpuffer 201..215 auch verschieden groß ausgebildet sein. Dadurch wird wegen kurzer Wege eine Systembeschleunigung erzielt, wenn in den näher liegenden Zwischenpuffern 201..215 häufiger vorkommende Förderobjekte abgelegt werden.

Die Ausführungsbeispiele zeigen mögliche Ausführungsvarianten einer Sortieranlage 101..105, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungs varianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Beispielsweise kann in der Fig. 4 auch ein zweiter, dem Paternoster 43 auf der anderen Seite der Zwischenpuffer 201..204 gegenüber liegender Paternoster vorgesehen sein. Der Paternoster 43 dient dann beispielsweise dem Einlagern von Objekten 7 in die Zwischenpuffer 201..204 und der zweite Paternoster dem Auslagern von Objekten 7 aus dem Zwischenpuffer 201..204. Auf diese Weise kann die Leistungsfähigkeit einer Sortieranlage nochmals deutlich gesteigert werden. Analog ist es auch in der in Fig. 7 dargestellten Sortieranlage 105 denkbar, dass anstelle der Lifte 41, 42 Paternoster vorgesehen sind.

An dieser Stelle wird angemerkt, dass sich die Zwischenlagerungsplätze 20101..21518 nicht notgedrungen auf Geraden oder in einem Ring bewegen. Neben allgemeinen Kurvenverläufen sind insbesondere auch U-förmige oder mäanderförmige Linienverläufe möglich. Denkbar ist schließlich auch, dass für die Zwischenpuffer 201..215 unterschiedliche Linien 301..315 vorgesehen sind, um die Zwischenpuffer 201..215 gegebenenfalls besser an eine Einbausituation anzupassen.

Insbesondere wird auch festgehalten, dass die dargestellten Sortieranlagen 101..105 in der Realität auch mehr oder weniger Bestandteile als dargestellt umfassen können.

Der Ordnung halber sei abschließend darauf hingewiesen, dass die Sortieranlagen 101..105, sowie deren Bestandteile zum besseren Verständnis ihres Aufbaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 101..105: Sortieranlage
- 201..215: Zwischenpuffer
- 20101..21518: Zwischenlagerungsplätze
- 301..315: Bewegungslinien für Zwischenlagerungsplätze
- 41..44: Ein- und/oder Auslagerungsvorrichtung

- 51..54: Übergabeplatz
- 6: Bewegungslinie für Übergabeplatz
- 7: Förderobjekt
- 8: Richtung für Ein-/Auslagerung
- 9: Zulieferförderer
- 10: Ablieferförderer

## Patentansprüche

1. Sortieranlage (101..105), umfassend
- einen ersten Zwischenpuffer (201) mit mehreren ersten, in einer ersten Linie (301) hintereinander angeordneten und entlang dieser ersten Linie (301) bewegbaren, Zwischenlagerungsplätzen (2101..20118), und
- zumindest einen zweiten Zwischenpuffer (202..215) mit mehreren zweiten, in einer zweiten Linie (302..315) hintereinander angeordneten und entlang dieser zweiten Linie (302..315) bewegbaren-Zwischenlagerungsplätzen (20201..21518), und
- eine Einlagerungsvorrichtung (41; 43) mit zumindest einem Übergabeplatz (51; 53), und
- eine Auslagerungsvorrichtung (42; 43) mit zumindest einem Übergabeplatz (52; 53), wobei der zumindest eine Übergabeplatz (51..53) jeweils der Einlagerungsvorrictitung (41; 43) und Auslagerungsvorrichtung (42; 43) entlang einer quer zur ersten Linie (301) und zur zweiten Linie (302..315) verlaufenden dritten Linie (6) verfahrbar ist, derart, dass der Übergabeplatz (51..53) gegenüber einem ersten Zwischenlagerungsplatz (20101..20118) oder einem zweiten Zwischenlagerungsplatz (20201..21518) positionierbar ist, wobei die erste Linie (301) und die zweite Linie (302..315) in zueinander parallelen Ebenen übereinander liegen und die dritte Linien (6) in einer auf die erste/zweite Ebene normal stehenden dritten Ebene liegt, und
- eine Steuerung, welche dazu eingerichtet ist, die zweiten Zwischenlagerungsplätze (20201..21518) entlang der zweiten Linie (302..315) zu bewegen, während ein erstes Förderobjekt (7) zwischen einem ersten Zwischenlagerungsplatz (20101..20118) und dem gegenüber positionierten Übergabeplatz (51..53) ausgetauscht und/oder der Übergabeplatz (51..53) zu einem zweiten Zwischenlagerungsplatz (20201..21518) bewegt wird,
wobei die Einlagerungsvorrichtung (41; 43) auf einer ersten Seite der ersten/zweiten Linie (301..315) und die Auslagerungsvorrichtung (42; 43) auf einer zweiten Seite der ersten/zweiten Linien (301..315) angeordnet sind, **dadurch gekennzeichnet, dass** die Einlagerungsvorrichtung (41; 43) und die Auslagerungsvorrichtung (42; 43) gegenüber aufgestellt sind und die Übergabeplätze (51..53) gegenüber demselben Zwischenlagerungsplatz (20101..20118, 20201..21518) positionierbar sind, um einen Einlagerungsvorgang in den Zwischenpuffer (201..215) und einen Auslagerungsvorgang aus dem Zwischenpuffer (201..215) simultan oder wenigstens im Wesentlichen simultan durchzuführen.

2. Sortieranlage (101..105) nach Anspruch 1, **dadurch gekennzeichnet, dass** die erste und/oder zweite Linie (301..315) geschlossen ist/sind.

3. Sortieranlage (101..105) nach Anspruch 1, **dadurch gekennzeichnet, dass** der Übergabeplatz (51; 53) der Einlagerungsvorrichtung (41; 43), der Zwischenlagerungsplatz (20115), an dem die Einlagerungsvorrichtung (41; 43) positioniert ist, und der Übergabeplatz (52; 53) der Auslagerungsvorrichtung (42; 43) in einer Bewegungsrichtung (8) eines Ein/Auslagerungsmechanismus hintereinander liegen.

4. Sortieranlage (101..105) nach einem der Ansprüche 1 bis 3, **dadurch gekennzeichnet, dass** die Ein- und/oder Auslagerungsvorrichtung als diskontinuierlicher Förderer (41, 42) ausgebildet ist.

5. Sortieranlage nach einem der Ansprüche 1 bis 3, **dadurch gekennzeichnet, dass** die Ein- und/oder Auslagerungsvorrichtung als im Wesentlichen kontinuierlicher Förderer (43) ausgebildet ist.

6. Sortieranlage nach einem der Ansprüche 1 bis 5, **dadurch gekennzeichnet, dass** die Einlagerungsvorrichtung (41; 43) mit einem Zulieferförderer (9) und die Auslagerungsvorrichtung (42; 43) mit einem Ablieferförderer (10) verbunden sind.

7. Verfahren zum Sortieren von Objekten (7) in einer Sortieranlage mit
- einem ersten Zwischenpuffer (201) mit mehreren ersten, in einer ersten Linie (301) hintereinander angeordneten und entlang dieser ersten Linie (301) bewegbaren, Zwischenlagerungsplätzen (20101..20118), und
- zumindest einem zweiten Zwischenpuffer (202..215) mit mehreren zweiten, in einer zweiten Linie (302..315) hintereinander angeordneten und entlang dieser zweiten Linie (302..315) bewegbaren Zwischenlagerungsplätzen (20201..21518), und
- einer Einlagerungsvorrichtung (41; 43) mit zumindest einem Übergabeplatz (51; 53), und
- einer Auslagerungsvorrichtung (42; 43) mit zumindest einem Übergabeplatz (52; 53), mit den Schritten:
a) Austauschen eines Förderobjekts (7) zwischen einem ersten Zwischenlagerungsplatz (20101..20118) und dem diesem gegenüber positionierten Übergabeplatz (51..53) der Einoder Auslagerungsvorrichtung (41..43), und
b) Verfahren des Übergabeplatzes (51..53) in eine Position gegenüber einem zweiten Zwischenlagerungsplatz (20201..21518),
c) Bewegen der zweiten Zwischenlägefungsplätze (20201..21518) entlang der zweiten Linie (302..315) während Schritt a) und/oder b),
wobei eine auf einer ersten Seite der ersten/zweiten Linie (301..315) angeordnete Einlagerungsvorrichtung (41; 43) und eine auf einer zweiten Seite der Linie (301..315) angeordnete Auslagerungsvorrichtung (42; 43) gegenüber aufgestellt werden, **dadurch gekennzeichnet, dass** die Übergabeplätze (51..53) gegenüber demselben Zwischenlagerungsplatz (20101..20118, 20201..21518) positioniert werden können, um einen Einlagerungsvorgang in den Zwischenpuffer (201..215) und einen Auslagerungsvorgang aus dem Zwischenpuffer (201..215) simultan oder wenigstens im Wesentlichen simultan durchzuführen.

8. Verfahren nach Anspruch 7, **dadurch gekennzeichnet, dass** die Schritte a) bis c) rekursiv anhand einer Ausgangs-Sortierreihenfolge jeweils mit einem anderen Förderobjekt (7) respektive mit einem anderen Zwischenlagerungsplatz (20101..21518) ausgeführt werden.

9. Verfahren nach einem der Ansprüche 7 und 8, **dadurch gekennzeichnet, dass** sich der Einlagerungsvorgang und der Auslagerungsvorgang zeitlich überschneiden.

10. Verfahren nach einem der Ansprüche 7 bis 9, dadurch gekenntzeichnet, dass die einem Zulieferförderer (9) und/oder Ablieferförderer (10) näher liegenden Zwischenpuffer (201..215) mit weniger Förderobjekten (7) befüllt werden als weiter weg liegende Zwischenpuffer (201..215).

11. Verfahren nach einem der Ansprüche 7 bis 10, **dadurch gekennzeichnet, dass** eine Einlagerungsvorrichtung/Auslagerungsvorrichtung (41..43) mehrere Förderobjekte (7) von einem Zulieferförderer (9) übernimmt/an einen Ablieferförderer (10) übergibt und diese an mehreren einzelnen Positionen hintereinander in verschiedene Zwischenlagerungsplätze (20101..21518) abgibt oder von diesen übernimmt, bevor erneut mehrere Förderobjekte (7) von einem Zulieferförderer (9) übernommen/an einen Ablieferförderer (10) übergeben werden.

## Claims

1. A sorting device (101..105), comprising
- a first intermediate buffer (201) with a plurality of first intermediate storage stations (20101..20118), arranged one behind another in a first line (301) and movable along the said first line (301), and
- at least one second intermediate buffer (202..215) with a plurality of second intermediate storage stations (20201..21518), arranged one behind another in a second line (302..315) and movable along the said second line (302..315), and
- a storage device (41; 43) with at least one transfer station (51; 53), and
- a retrieval device (42; 43) with at least one transfer station (52; 53), wherein
the at least one transfer station (51..53) of the storage device (41; 43) and retrieval device (42; 43) in each case can be traversed along a third line (6), running transverse to the first line (301) and the second line (302..315), such that the transfer station (51..53) can be positioned opposite a first intermediate storage station (20101..20118), or a second intermediate storage station (20201..21518), wherein
the first line (301) and the second line (302..315) are located in planes one above another that are parallel to one another, and the third line (6) is located in a third plane that stands normal to the first/second planes, and
- a controller, which is equipped for the purpose of moving the second intermediate storage stations (20201..21518) along the second line (302..315), while a first conveyed object (7) is changed over between a first intermediate storage station (20101..20118) and the transfer station (51..53) positioned opposite the latter, and/or the transfer station (51..53) is moved to a second intermediate storage station (20201..21518),
wherein the storage device (41; 43) is arranged on a first side of the first/second lines (301..315) and the retrieval device (42; 43) is arranged on a second side of the first/second lines (301..315),
**characterised in that**,
the storage device (41; 43 and the retrieval device (42; 43) are positioned opposite one another, and the transfer stations (51..53) can be positioned opposite the same intermediate storage station (20101..20118, 20201..21518), in order to execute a storage procedure into the intermediate buffer (201..215) and a retrieval procedure from the intermediate buffer (201..215) simultaneously, or at least essentially simultaneously.

2. The sorting device (101..105) in accordance with claim 1, **characterised in that**, the first and/or second line (301..315) is/are closed.

3. The sorting device (101..105) in accordance with claim 1, **characterised in that**, the transfer station (51; 53) of the storage device (41; 43), the intermediate storage station (20115) at which the storage device (41; 43) is positioned, and the transfer station (52; 53) of the retrieval device (42; 43), are located one behind another in a direction of movement (8) of a storage/retrieval mechanism.

4. The sorting device (101..105) in accordance with one of the claims 1 to 3, **characterised in that**, the storage and/or retrieval device is designed as a discontinuous conveyor (41, 42).

5. The sorting device in accordance with one of the claims 1 to 3, **characterised in that**, the storage and/or retrieval device is designed as an essentially continuous conveyor (43).

6. The sorting device in accordance with one of the claims 1 to 5, **characterised in that**, the storage device (41; 43) is connected with a supply conveyor (9) and the retrieval device (42; 43) is connected with a delivery conveyor (10).

7. A method for the sorting of objects (7) in a sorting device, with
- a first intermediate buffer (201) with a plurality of first intermediate storage stations (20101..20118), arranged one behind another in a first line (301) and movable along the said first line (301), and
- at least one second intermediate buffer (202..215) with a plurality of second intermediate storage stations (20201..21518), arranged one behind another in a second line (302..315) and movable along the said second line (302..315), and
- a storage device (41; 43) with at least one transfer station (51; 53), and
- a retrieval device (42; 43) with at least one transfer station (52; 53), with the steps:
a) changeover of a conveyed object (7) between a first intermediate storage station (20101..20118) and the transfer station (51..53) of the storage or retrieval device (41..43) that is positioned opposite the first intermediate storage station (20101..20118), and
b) traversing of the transfer station (51..53) into a position opposite a second intermediate storage station (20201..21518),
c) movement of the second intermediate storage stations (20201..21518) along the second line (302..315) during step a) and/or step b),
wherein a storage device (41; 43) arranged on a first side of the first/second line (301..315), and a retrieval device (42; 43) arranged on a second side of the line (301..315) are positioned opposite one another,
**characterised in that**,
the transfer stations (51..53) can be positioned opposite the same intermediate storage station (20101..20118, 20201..21518) in order to execute a storage procedure into the intermediate buffer (201..215) and a retrieval procedure from the intermediate buffer (201..215) simultaneously, or at least essentially simultaneously.

8. The method in accordance with claim 7, **characterised in that**, the steps a) to c) are executed recursively by means of an output sorting sequence, in each case with another conveyed object (7), or rather with another intermediate storage station (20101..21518).

9. The method in accordance with one of the claims 7 to 8, **characterised in that**, the storage procedure and the retrieval procedure overlap in time.

10. The method in accordance with one of the claims 7 to 9, **characterised in that**, the intermediate buffers (201..215) that are located nearer to a supply conveyor (9) and/or delivery conveyor (10) are filled with fewer conveyed objects (7) than intermediate buffers (201..215) that are located further away.

11. The method in accordance with one of the claims 7 to 10, **characterised in that**, a storage device/retrieval device (41.. 43) acquires a plurality of conveyed objects (7) from a supply conveyor (9) / transfers a plurality of conveyed objects (7) to a delivery conveyor (10), and delivers these to a plurality of individual positions one behind another in various intermediate storage stations (20101..21518), or acquires these from the latter, before a plurality of conveyed objects (7) are again acquired from a supply conveyor (9) / are again delivered to a delivery conveyor (10).

## Revendications

1. Installation de tri (101..105) comprenant
- un premier tampon intermédiaire (201) avec plusieurs premiers emplacements de stockage intermédiaire (20101..20118) disposées les uns derrière les autres dans une première ligne (301) et mobiles le long de cette première ligne (301) et
- au moins un deuxième tampon intermédiaire (202..215) avec plusieurs deuxièmes emplacements de stockage intermédiaire (20201..21518) disposés les uns derrière les autres dans une deuxième ligne (302..315) et mobiles le long de cette deuxième ligne (302..315) et
- un dispositif de stockage (41 ; 43) avec au moins un emplacement de transfert (51 ; 53) et
- un dispositif de déstockage (42 ; 43) avec au moins un emplacement de transfert (52 ; 53), l'au moins un emplacement de transfert (51..53) du dispositif de stockage (41 ; 43) et du dispositif de déstockage (42 ; 43) étant mobile le long d'une troisième ligne (6) s'étendant transversalement par rapport à la première ligne (301) et à la deuxième ligne (302..315), de façon à ce que l'emplacement de transfert (51..53) puisse être positionné par rapport à un premier emplacement de stockage intermédiaire (20101..20118) ou à un deuxième emplacement de stockage intermédiaire (20201..21518), la première ligne (301) et la deuxième ligne (302..315) étant superposées dans des plans parallèles entre eux et la troisième ligne (6) se trouvant dans un troisième plan perpendiculaire au premier/deuxième plan et
- un dispositif de commande qui est conçu pour déplacer les deuxièmes emplacements de stockage intermédiaire (20201..21518) le long de la deuxième ligne (302..315) pendant qu'un première objet à transporter (7) est échangé entre un premier emplacement de stockage intermédiaire (20101..20118) et l'emplacement de transfert (51..53) par rapport à celui-ci et/ou l'emplacement de transfert (51..53) est déplacé vers un deux deuxième emplacement de stockage intermédiaire (20201..21518),
le dispositif de stockage (41 ; 43) étant disposé sur un premier côté de la première/deuxième ligne (301..315) et le dispositif de déstockage (42 ; 43) étant disposé sur un deuxième côté des premières/deuxièmes lignes (301..315), **caractérisé en ce que** le dispositif de stockage (41 ; 43) et le dispositif de déstockage (42 ; 43) sont placés l'un en face de l'autre et les emplacements de transfert (51..53) peuvent être positionnés en face du même emplacement de stockage intermédiaire (20101..20118, 20201..21518) afin d'effectuer un processus de stockage dans le tampon intermédiaire (201..215) et un processus de déstockage du tampon intermédiaire (201..215) simultanément ou au moins globalement simultanément.

2. Installation de tri (101..105) selon la revendication 1, **caractérisée en ce que** la première et/ou la deuxième ligne (301..315) est/sont fermée(s).

3. Installation de tri (101..105) selon la revendication 1, **caractérisé en ce que** l'emplacement de transfert (51 ; 53) du dispositif de stockage (41 ; 43), l'emplacement de stockage intermédiaire (20115), au niveau duquel le dispositif de stockage (41 ; 43) est positionné, et l'emplacement de transfert (52 ; 53) du dispositif de déstockage (42 ; 43) se trouvent les uns derrière les autres dans une direction de mouvement (8) d'un mécanisme de stockage/déstockage.

4. Installation de tri (101..105) selon l'une des revendications 1 à 3, **caractérisée en ce que** le dispositif de stockage et/ou de déstockage est conçu comme un convoyeur discontinu (41,42).

5. Installation de tri (101..105) selon l'une des revendications 1 à 3, **caractérisée en ce que** le dispositif de stockage et/ou de déstockage est conçu comme un convoyeur globalement continu (43).

6. Installation de tri selon l'une des revendications 1 à 5, **caractérisée en ce que** le dispositif de stockage (41 ; 43) est relié avec un convoyeur de livraison (9) et le dispositif de déstockage (42 ; 43) est relié avec un convoyeur de départ (10).

7. Procédé de triage d'objets (7) dans une installation de tri avec
- un premier tampon intermédiaire (201) avec plusieurs premiers emplacements de stockage intermédiaire (20101..20118) disposées les uns derrière les autres dans une première ligne (301) et mobiles le long de cette première ligne (301) et
- au moins un deuxième tampon intermédiaire (202..215) avec plusieurs deuxièmes emplacements de stockage intermédiaire (20201..21518) disposés les uns derrière les autres dans une deuxième ligne (302..315) et mobiles le long de cette deuxième ligne (302..315) et
- un dispositif de stockage (41 ; 43) avec au moins un emplacement de transfert (51 ; 53) et
- un dispositif de déstockage (42 ; 43) avec au moins un emplacement de transfert (52 ; 53) avec les étapes suivantes :
a) échange d'un objet à convoyer (7) entre un premier emplacement de stockage intermédiaire (20101..20118) et l'emplacement de transfert (51..53) disposé en face de celui-ci du dispositif de stockage ou de déstockage (41..43) et
b) déplacement de l'emplacement de transfert (51..53) vers une position en face d'un deuxième emplacement de stockage intermédiaire (20201..21518),
c) déplacement des deuxième emplacements de stockage intermédiaire (20201..21518) le long de la deuxième ligne (302..3015) pendant l'étape a) et/ou b), un dispositif de stockage (41 ; 43), disposé sur un premier côté de la première/deuxième ligne (301..315) et un dispositif de déstockage (42 ; 43), disposé sur un deuxième côté de la ligne (301..315) étant placées l'un en face l'autre, **caractérisée en ce que** les emplacements de transfert (51..53) peuvent être positionnés en face du même emplacement de stockage intermédiaire (20101..21518, 20201..21518) afin d'effectuer simultanément ou globalement simultanément un processus de stockage dans le tampon intermédiaire (201..215) et un processus déstockage du tampon intermédiaire (201..215).

8. Procédé selon la revendication 7, **caractérisé en ce que** les étapes a) à c) sont exécutées de manière récursive à l'aide d'un ordre de tri de sortie chacune avec un autre objet à convoyer (7) respectivement avec un autre emplacement de stockage intermédiaire (20101..21518).

9. Procédé selon l'une des revendications 7 et 8, **caractérisé en ce que** le processus de stockage et le processus de déstockage coïncident temporellement.

10. Procédé selon l'une des revendications 7 à 9, **caractérisé en ce que** les tampons intermédiaires (201..215) les plus proches d'un convoyeur de livraison (9) et/ou d'un convoyeur de départ (10) sont remplis avec moins d'objets à convoyer (7) que les tampons intermédiaires (201..215) situés plus loin.

11. Procédé selon l'une des revendications 7 à 10, **caractérisé en ce que** le dispositif de stockage/déstockage (41..43) prend en charge, à l'aide d'un convoyeur de livraison (9), plusieurs objets à convoyer (7) / transfère plusieurs objets à convoyer à un convoyeur de départ (10) et les dépose au niveau de plusieurs positions distinctes successivement dans différents emplacements de stockage intermédiaire (20101..21518) ou les en retire, avant de prendre en charge à nouveau plusieurs objets à convoyer (7) à l'aide d'un convoyeur de livraison (9) / de transférer ces objets à convoyer à un convoyeur de départ (10).
